# EUROPEAN PATENT APPLICATION

(11) **EP 4 809 806 A1**
(43) Date of publication of application: **23.09.2026**
(21) Application number: 24890350.2
(22) Date of filing: 26.09.2024
(51) Int. Cl.: A01D 34/00, H02K 11/215

(54) **MOWING ROBOT, AND AUTOMATIC STEERING CALIBRATION METHOD THEREFOR**

(30) Priority: 16.11.2023 CN 202311531653
(71) Applicant: Zhejiang Sunseeker Industrial Co., Ltd., Jinhua, Zhejiang 321000 (CN)
(72) Inventor: WANG, Zhiwen, Jinhua, Zhejiang 321000 (CN); WANG, Zhicheng, Jinhua, Zhejiang 321000 (CN)
(74) Representative: Manna, Sara
(86) International application number: PCT/CN2024/121555
(87) International publication number: WO 2025/102992

(57) **Abstract**

The present disclosure discloses a robotic mower and an automated steering calibration method therefor. The automated steering calibration method includes the following steps: controlling a steerable wheel (4) to rotate toward a first limit position until the steerable wheel (4) reaches the first limit position, and recording a first voltage output by at least one linear Hall sensor at this time; controlling the steerable wheel (4) to rotate toward a second limit position until the steerable wheel (4) reaches the second limit position, and recording a second voltage output by at least one linear Hall sensor at this time; determining or correcting a mapping relationship between an output voltage of the linear Hall sensor and a steering angle according to the first voltage and the second voltage, to obtain a corresponding third voltage output by at least one linear Hall sensor when the steerable wheel (4) is at a straight-ahead position; and controlling a steering motor (5) to rotate until a voltage output by at least one linear Hall sensor is equal to the third voltage.

## Description

### TECHNICAL FIELD

The present disclosure relates to the field of autonomous operation devices, and in particular, to a robotic mower and an automated steering calibration method therefor.

### BACKGROUND

The robotic mower can automatically perform precise lawn mowing, thereby greatly facilitating lawn maintenance by a user and offering promising application prospects. The existing robotic mower includes a top lid, a chassis, and a movement mechanism, where the movement mechanism is configured to drive the chassis to move in a travel path direction and generally includes a wheel, a motor driving the wheel to travel, and the like. The chassis is connected to the movement mechanism and is configured to bear a cutter head for cutting a lawn, a motor, or the like. The top lid covers the top of the chassis, such that the top lid can not only protect the chassis from being damaged, but also play a role in beautifying.

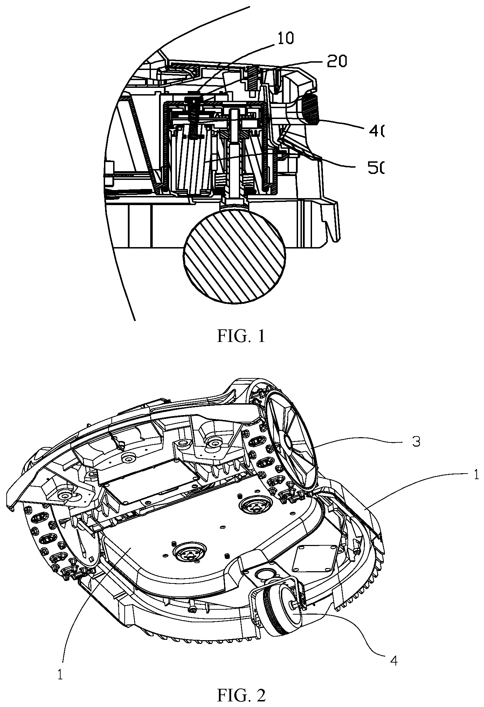

The movement mechanism generally includes left and right driving wheels at the rear and a steerable wheel at the front. The two driving wheels control steering through differential speed, and the steerable wheels control steering through a steering motor. As shown in FIG. 1, a linear Hall sensor 10 is arranged directly above a square magnetic steel 20, and the square magnetic steel 20 is located directly above an output shaft 40 of a steering motor 30. In addition, the square magnetic steel 20 steers synchronously with the motor. The existing steering calibration method for the robotic mower first requires manual pre-positioning. Specifically, before leaving the factory, the steering motor needs to be manually rotated to a straight-ahead position. Due to inherent deviations in the magnetic steel, the recorded data varies from machine to machine. Therefore, it is necessary to first read the position of the magnetic steel after it has been manually aligned. This position is then stored in the EEPROM of the microcontroller. Only after this step can the motor be controlled; otherwise, controlling the steering of the motor is not possible. Since manual pre-positioning is required, the process is cumbersome and the working efficiency is low. In addition, manual alignment introduces errors, which reduces the accuracy of steering calibration.

### SUMMARY

The objective of the present disclosure is to provide a robotic mower and an automated steering calibration method therefor, so as to solve the above problems. Therefore, the technical solutions adopted by the present disclosure are as follows: According to one aspect of the present disclosure, an automated steering calibration method for a robotic mower is provided. The robotic mower includes a driving wheel and a steerable wheel, and the steerable wheel is controlled to steer by a steering motor, where the robotic mower further includes at least one linear Hall sensor and one permanent magnet; the permanent magnet is disposed on a member that rotates synchronously with an output shaft of the steering motor, and positions of the at least one linear Hall sensor and the one permanent magnet are arranged such that there is a unique mapping relationship between an output voltage of the at least one linear Hall sensor and a steering angle of the steerable wheel; and the automated steering calibration method includes the following steps:
controlling the steerable wheel to rotate toward a first limit position until the steerable wheel reaches the first limit position, and recording a first voltage output by the at least one linear Hall sensor at this time;
controlling the steerable wheel to rotate toward a second limit position until the steerable wheel reaches the second limit position, and recording a second voltage output by the at least one linear Hall sensor at this time;
determining or correcting the unique mapping relationship according to the first voltage and the second voltage to obtain a corresponding third voltage output by the at least one linear Hall sensor when the steerable wheel is at a straight-ahead position; and
controlling the steering motor to rotate until a voltage output by the at least one linear Hall sensor is equal to the third voltage.

In an embodiment, the at least one linear Hall sensor includes two linear Hall sensors; the two linear Hall sensors are located on two sides of a central plane and are located directly above a movement trajectory of the permanent magnet; the central plane is parallel to a straight-ahead traveling direction of the robotic mower, an output shaft of the steering motor is located on the central plane, and the first limit position and the second limit position are symmetrically disposed on left and right sides of the central plane; and a distance between the permanent magnet and the linear Hall sensor on a first side is *a* = 2*r* sin(*α*/2), and a distance between the permanent magnet and the linear Hall sensor on a second side is *b* = 2r cos(*α*/2), where *r* is a distance between the permanent magnet and a rotation center of the steering motor, and *α* is an included angle formed by the permanent magnet, the rotation center, and the linear Hall sensor on the first side; and a ratio of *a* to *b* represents steering of the steering motor.

In an embodiment, the two linear Hall sensors are disposed at the first limit position and the second limit position, respectively.

In an embodiment, the permanent magnet is located on the central plane when the steerable wheel is oriented straight ahead.

In an embodiment, the at least one linear Hall sensor includes one linear Hall sensor, and the one linear Hall sensor is located directly above a movement trajectory of the permanent magnet; and a distance between the permanent magnet and the linear Hall sensor is *d* = 2*r* sin(*α*/2), where *r* is a distance between the permanent magnet and a rotation center of the steering motor, and *α* is an included angle formed by the permanent magnet, the rotation center, and the linear Hall sensor; and a value of *d* or a corresponding output voltage of the linear Hall sensor represents steering of the steering motor.

In an embodiment, the permanent magnet is located at the first limit position or the second limit position.

In an embodiment, the at least one linear Hall sensor is arranged on a main control board of the robotic mower.

In an embodiment, the permanent magnet is a circular magnetic steel.

In an embodiment, the unique mapping relationship is determined by establishing a mapping function or a mapping table.

In an embodiment, the automated steering calibration method further includes: automatically calibrating a steerable wheel each time before the robotic mower departs from a docking station.

In an embodiment, the automated steering calibration method further includes:
when the robotic mower is in a working state, performing automated steering calibration in response to detecting that a difference between the first voltage or the second voltage and the first voltage or the second voltage recorded during previous automated steering calibration is greater than an error threshold.

In an embodiment, the robotic mower is controlled to return to a docking station before automated steering calibration.

In an embodiment, correction of the unique mapping relationship includes correction of a parameter of the linear Hall sensor.

According to another aspect of the present disclosure, a robotic mower is further provided. The robotic mower includes a main control board. The main control board stores a computer program, where the computer program, when executed by the main control board, is caused to implement the steps of the automated steering calibration method described above.

### BRIEF DESCRIPTION OF THE DRAWINGS

FIG. 1 is a partial cross-sectional view of a steerable wheel assembly of an existing robotic mower, showing an arrangement structure of a magnetic steel and a linear Hall sensor;
FIG. 2 is a side view of a robotic mower according to the present disclosure;
FIG. 3 is an exploded view of a steerable wheel assembly of the robotic mower shown in FIG. 2;
FIG. 4 is a schematic diagram of arrangement of a magnetic steel and a linear Hall sensor according to a first embodiment of the present disclosure;
FIG. 5 is a schematic diagram of the principle of steering detection according to a first embodiment of the present disclosure;
FIG. 6 is a schematic diagram of arrangement of a magnetic steel and a linear Hall sensor according to a second embodiment of the present disclosure;
FIG. 7 is a schematic diagram of the principle of steering detection according to a second embodiment of the present disclosure; and
FIG. 8 is a flowchart of an automated steering calibration method for a robotic mower according to the present disclosure.

### DETAILED DESCRIPTION

Preferred embodiments of the present disclosure will be described in detail below with reference to the accompanying drawings, such that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure.

In the following description, for the purposes of explanation, some specific details are set forth in order to provide a thorough understanding of the various disclosed embodiments. However, those skilled in the related art will recognize that an embodiment can be practiced without one or more of the specific details. In other instances, well-known apparatuses, structures, and techniques associated with the present disclosure may not be shown or described in detail to avoid unnecessarily obscuring the description of the embodiments.

Throughout this specification, reference to "one embodiment" or "an embodiment" means that a particular feature, structure, or characteristic described with reference to an embodiment is included in at least one embodiment. Therefore, appearances of the phrase "in one embodiment" or "in an embodiment" at various positions throughout this specification do not necessarily all refer to the same embodiment. In addition, the particular feature, structure, or characteristic may be combined in any manner in one or more embodiments.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms.

As shown in FIGs. 1 to 3, a robotic mower includes a top lid 1, a chassis 2, and a movement mechanism, where the movement mechanism is configured to drive the chassis 2 to move in a travel path direction. The chassis 2 is connected to the movement mechanism and is configured to bear a cutter head for cutting a lawn, a motor, or the like. The top lid 1 covers the top of the chassis 2, such that the top lid can not only protect the chassis from being damaged, but also play a role in beautifying.

Various functional modules, such as an energy module, a detection module, an interaction module, and a control module (also referred to as a main control board), are also mounted on the chassis 2. The energy module is configured to be used for providing energy for various tasks of the robotic mower. The detection module is configured as at least one sensor that senses an environmental parameter or a working parameter of the robotic mower. The interaction module is configured to be at least used for receiving control instruction information input by a user, transmitting information requiring user perception, and communicating with other systems or devices to transmit and receive information. The main control board generally includes at least one processor and at least one non-volatile memory. The memory stores a pre-written computer program or an instruction set, and the processor, according to the computer program or the instruction set, controls the performance of movements, work, and the like of the robotic mower. The main control board may be a printed circuit board (PCB), a flexible circuit board (FPC), or the like.

The movement mechanism generally includes left and right driving wheels 3 at the front and a steerable wheel 4 at the rear. The two driving wheels 3 can control steering through differential speed, and the steerable wheel 4 can control steering through a steering motor 5. Specifically, the steering motor 5 is fixedly mounted in a seat body 6, the steerable wheel 4 is mounted on a fork 7, and the fork 7 is drivingly connected to an output shaft 51 of the steering motor 5. The seat body 6 includes a base 61 and a cover body 62 located at the top of the base 61. The base 61 may be connected to the chassis 2 via screws, or connected to the chassis 2 by other means. The cover body 62 covers a top surface of the base 61 and may be snap-fitted to the base 61. In addition, the seat body 6 is provided with an accommodating cavity. The steering motor 5 is mounted in the accommodating cavity, and an end part of the output shaft 51 of the steering motor passes through the cover body 62. A flange 52 is fixed to the end part of the output shaft 51. A first gear 53 is fixed on the output shaft 51 (e.g., via splines). The fork 7 includes a fork part and a rotating shaft 71. The fork part is U-shaped, and the steerable wheel 4 is mounted between two arm parts of the fork part. A bottom end of the rotating shaft 71 is fixed to the fork part and is movably provided in the accommodating cavity of the base 61 in a protruding manner. A second gear 54 is fixed on the rotating shaft 71 (e.g., via splines) and meshes with the first gear 53. Therefore, the steering motor 5 can drive the steerable wheel 4 to steer.

The second gear 54 is provided with a first limiting part 541, the base 61 of the seat body 6 is provided with a second limiting part 611, and a steering angle range (e.g., ± 90°) of the steerable wheel 4 is limited through the cooperation of the first limiting part 541 and the second limiting part 611. The steering angle of the steerable wheel 4 is generally determined by an output voltage generated by a magnetic steel 9, which is detected by a linear Hall sensor (not shown). In the present disclosure, the magnetic steel 9 is generally eccentrically disposed relative to the output shaft 51 of the steering motor 5, such that there is a unique mapping relationship between an output voltage of the linear Hall sensor and a steering angle of the steerable wheel 4. Therefore, once the output voltage of the linear Hall sensor is detected, the steering angle of the steerable wheel 4 can be obtained according to the mapping relationship determined in advance. Preferably, the magnetic steel 9 is fixed on a member that rotates synchronously with the output shaft 51 of the steering motor 5. In the specific embodiments, the magnetic steel 9 is fixedly mounted on a flanged edge of the flange 52. For example, the magnetic steel is adhered to the flanged edge of the flange 52 by an adhesive, or a mounting groove is formed on the flanged edge of the flange 52, and then the magnetic steel 9 is embedded in the mounting groove. The present disclosure does not limit a mounting method for the magnetic steel 9. The dimension of the flange 52 may be scaled according to actual needs to adjust a rotational radius of the magnetic steel 9. When the steerable wheel assembly is mounted on the robotic mower, the magnetic steel 9 will be within an effective detection range of the linear Hall sensor. Preferably, the linear Hall sensor 8 may be fixedly mounted on a main control board (not shown) of the robotic mower to avoid wiring. In this case, the main control board is required to be mounted at a position proximal to the magnetic steel 9.

How to determine the mapping relationship between the output voltage of the linear Hall sensor and the steering angle of the steerable wheel 4 is described in detail below.

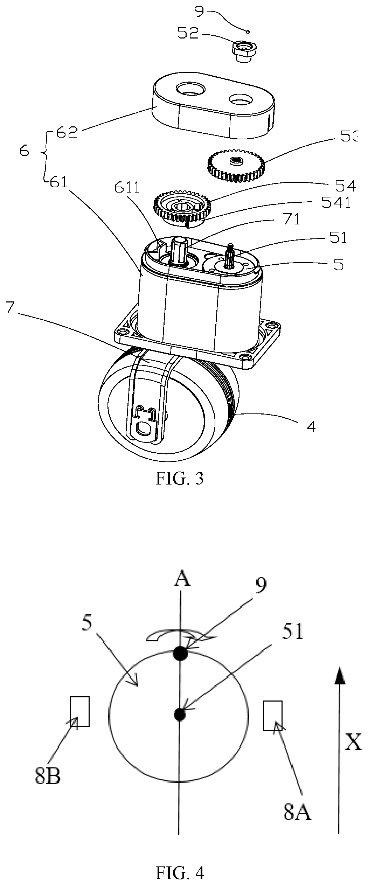

Referring to FIG. 4, FIG. 4 shows an arrangement structure of a magnetic steel and a linear Hall sensor according to a first embodiment of the present disclosure. In this embodiment, one magnetic steel 9 and two linear Hall sensors 8A and 8B are included. For ease of description, an orientation X of the steerable wheel 4 is defined as a straight-ahead direction when the robotic mower travels in a straight line. Meanwhile, a central plane A is defined, the central plane A is parallel to the straight-ahead direction, and the output shaft 51 of the steering motor 5 is located on the central plane A. Generally, left and right steering limit positions of the steerable wheel 4 are mirror-symmetrical about the central plane A. In the specific embodiments, taking the central plane as a starting point (denoted as 0°), the left steering limit angle is 90° (denoted as -90°), and the right steering limit angle is also 90° (denoted as +90°). It should be understood that the limit angle is not limited to ± 90°.

In this embodiment, when the steerable wheel 4 is oriented straight ahead, the magnetic steel 9 is located on the central plane A. The two linear Hall sensors 8A and 8B are disposed on two sides of the central plane, respectively. In this embodiment, the two linear Hallsensors are symmetrically disposed about the central plane. For example, the linear Hall sensor 8A is located on a first side (e.g., a right side) and the linear Hall sensor 8B is located on a second side (e.g., a left side). Ideally, the two linear Hall sensors 8A and 8B are located directly above a movement trajectory of the magnetic steel 9. Since scale variations of the linear Hall sensors 8A and 8B and the magnetic steel 9 in a rotation plane of the magnetic steel 9 are much greater than a height difference between the two in an axial direction, the magnetic steel 9 and the linear Hall sensors 8A and 8B can be regarded as being on the same plane. That is, the distance between the linear Hall sensor and the output shaft 51 of the steering motor 5 and the distance between the magnetic steel 9 and the outer shaft of the steering motor are regarded as equal.

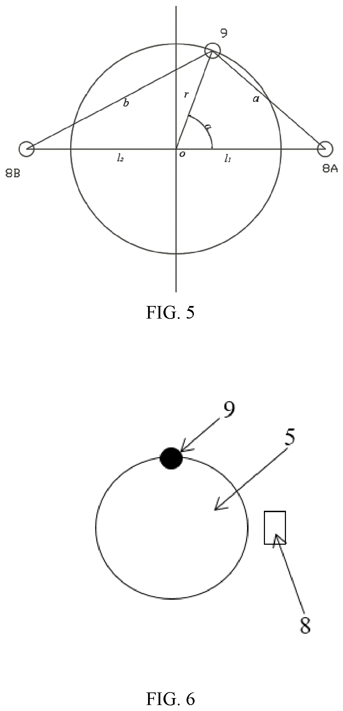

With the above structure, when the steering motor is controlled to rotate leftward and rightward, the distance between the magnetic steel 9 and the two linear Hall sensors 8A and 8B varies, and the two linear Hall sensors 8A and 8B output different voltage values. Since values of output voltages of the linear Hall sensors 8A and 8B are in a linear relationship with the distance *x* to the magnetic steel 9, i.e., *E = k · x* + *p*, where k and P are linear Hall sensor parameters, the distance to the magnetic steel 9 may be used to represent the magnitude of the values of the output voltages of the linear Hall sensors. Specifically, with reference to FIG. 5, assuming that a distance from the magnetic steel 9 to the rotation center is *r*, a distance from the right linear Hall sensor 8A to the rotation center o is *l*₁, a distance from the left linear Hall sensor 8B to the rotation center o is *l*₂, and an included angle between the magnetic steel 9, the rotation center o, and the right linear Hall sensor 8A is *α*, a distance from the magnetic steel to the right linear Hall sensor 8A is $a = \sqrt{{r}^{2} + {l}_{1}^{2} - 2 {rl}_{1} cos α}$, and a distance from the magnetic steel 9 to the left linear Hall sensor 8B is $b = \sqrt{{r}^{2} + {l}_{2}^{2} - 2 {rl}_{2} cos \left(π-α\right)}$. A ratio of *a* to b is different at any two positions of the magnetic steel 9 during the process from the right limit position to the left limit position, such that a ratio of *a* to *b* can reflect the steering of the steerable wheel. Correspondingly, the output voltage of the right linear Hall sensor 8A is *Eₐ* = *k*₁ *· a* + *p*₁, and the output voltage of the left linear Hall sensor 8B is *E_{b} = k*₂ *· b + p*₂. Preferably, the two linear Hall sensors are linear Hall sensors of the same model; that is, linear Hall sensor parameters *k* and *p* are the same to simplify the calculation. Therefore, (*Eₐ - p*) / (*E_{b} - p*) = *a*/*b.* That is, a ratio of the output voltages of the linear Hall sensors 8A and 8B minus *p* can reflect the steering of the steerable wheel.

In the case where the left and right linear Hall sensors 8A and 8B are symmetrically disposed about the central plane, when the magnetic steel is located on the central plane (that is, the steerable wheel is oriented straight ahead), *a = b, l*₁ = *l*₂, and *α* = *π*/2, and thus *a*/*b* = 1. Based on this arrangement, it is not necessary to consider deviations between magnetic steels during production, and a straight-ahead position of the steerable wheel can be determined more conveniently and accurately. This is because, generally, the consistency of magnetic steels is relatively low, while the consistency of linear Hall sensors is relatively high. That is, the deviations between different magnetic steels of the same batch cannot be ignored. However, the deviations between different linear Halls of the same batch, or even the deviations between different batches of linear Halls, can be ignored.

Therefore, when the steering of the steerable wheel is calibrated, the steerable wheel 4 does not need to be manually aligned, and the alignment is automatically performed by the robotic mower according to a preset program, thereby improving the production efficiency, reducing the production cost, and improving the accuracy of steering calibration.

In order to further simplify the calculation and save computing power, structurally, the two linear Hall sensors 8A and 8B are both disposed directly above a rotation trajectory of the magnetic steel 9. In this case, *l*₁ = *l*₂ = *r*, and thus *a =* 2*r* sin(*α*/2), *b = 2r* cos(*α*/2), and *a*/*b* = tan(*α*/²). During the steering of the steerable wheel from the right limit position to the left limit position, *α* varies from 0° to 180°. Therefore, *a*/*b* is always different during the steering of the steerable wheel, and a rotation angle of the steerable wheel can be inversely derived from the value of a/b. Specifically, when the value of a/b is minimum (that is, the output voltage of the right linear Hall sensor 8A is maximum and the output voltage of the left linear Hall sensor 8B is minimum), it indicates that the steerable wheel 4 is at the right limit position; when *a*/*b* = 1 (the output voltage of the right linear Hall sensor 8A is equal to the output voltage of the left linear Hall sensor 8B), it indicates that the steerable wheel 4 is at a straight-ahead position; and when the value of a/b is maximum (that is, the output voltage of the left linear Hall sensor 8B is maximum and the output voltage of the right linear Hall sensor 8A is minimum), it indicates that the steerable wheel 4 is at the left limit position. It should be noted herein that the above calculations are all performed under ideal conditions; that is, the magnetic steel and the linear Hall sensor are regarded as points and are located on the same plane, and the two coincide at the limit position, such that a or b may be 0. However, in actual use, a and b may only have maximum values and minimum values. That is, the output voltages of the two linear Hall sensors 8A and 8B may have maximum values and minimum values, and when the ratio of the two is a maximum value or a minimum value, it is determined that the steerable wheel is at the limit position. In addition, these maximum values and minimum values are all determined in experiments and tests.

In some embodiments, the above technical solution of one magnetic steel and two linear Hall sensors may be used to automatically align and/or correct the straight-ahead direction of the robotic mower. In this case, steering control of the steering motor may be achieved by using, for example, a magnetic encoder disc mounted inside the motor. Further, since a deviation angle of the motor relative to an initial direction (straight-ahead direction) may be obtained by the above solution, the solution may be used to verify with the control data of the magnetic encoder disc. Even further, for some embodiments, the magnetic encoder disc may be omitted and the above solution may be used alone to control the direction of the steerable wheel, thereby further reducing the cost.

Referring to FIG. 6, FIG. 6 shows the arrangement of a magnetic steel and a linear Hall sensor according to a second embodiment of the present disclosure. In this embodiment, a magnetic steel 9 and a linear Hall sensor 8 are included. That is, compared with the first embodiment, the structure in this embodiment is simplified, and only one magnetic steel 9 and one corresponding linear Hall sensor 8 are reserved.

Since a maximum central angle corresponding to the movement trajectory of the magnetic steel is 180°, a value of a voltage output by the linear Hall sensor 8 is unique at any position within a movement range of the magnetic steel 9. Therefore, an absolute value of the voltage output by the linear Hall sensor will be used to represent the steering of the steerable wheel.

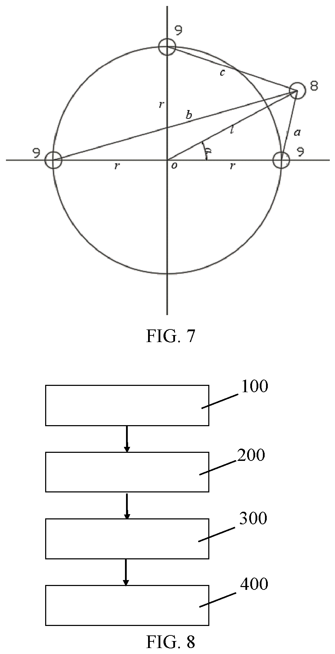

Specifically, referring to FIG. 7, a distance from the linear Hall sensor 8 to the rotation center o is *l*, a distance from the magnetic steel 9 to the rotation center o is *r*, an included angle between the linear Hall sensor 8, the rotation center o, and the magnetic steel 9 at the right limit position is *α*, a distance from the linear Hall sensor 8 to the magnetic steel 9 at the right limit position is $a = \sqrt{{l}^{2} + {r}^{2} - 2 lr cos α}$, a distance from the linear Hall sensor 8 to the magnetic steel 9 at the left limit position is $b = \sqrt{{l}^{2} + {r}^{2} - 2 lr cos \left(π-α\right)}$, and a distance from the linear Hall sensor 8 to the magnetic steel 9 at a middle position is $c = \sqrt{{l}^{2} + {r}^{2} - 2 lr cos \left(π/2-α\right)}$. Then, when the output voltage of the linear Hall sensor 8 is *E_{right}* = *k · a* + *p*, a control module of the robotic mower may determine that the steerable wheel has rotated rightward to the limit position. When the output voltage of the linear Hall sensor 8 is *E_{left}* = *k · b + p*, the control module of the robotic mower may determine that the steerable wheel has rotated rightward to the limit position. When the output voltage of the linear Hall sensor 8 is *E_{mid}* = *k · c* + *p*, the control module of the robotic mower may determine that the steerable wheel has rotated to the middle position (i.e., straight-ahead position). *k*and*p* are linear Hall sensor parameters. Similarly, a mapping relationship between the rotation angle of the steerable wheel and a Hall output voltage may be determined by the characteristics of the linear Hall sensor 8 and a limited number of tests, and then the rotation angle of the steerable wheel may be inversely derived from the output voltage of the linear Hall sensor 8.

In order to simplify the calculation and save computing power, structurally, the linear Hall sensor 8 is disposed directly above the rotation trajectory of the magnetic steel 9, and the linear Hall sensor 8 is disposed at the limit position on one side, for example, at the right limit position. In this case, an included angle between the magnetic steel 9, the rotation center o, and the linear Hall sensor 8 is *α*, a distance from the linear Hall sensor 8 to the magnetic steel 9 is *d* = 2*r* sin(*α*/2), and the output voltage of the linear Hall sensor 8 is *E* = 2*kr* sin(*α*/2) + *p*. Since *k*, *r*, and *p* are known parameters, the steering angle of the steerable wheel 4 may be inversely derived from the output voltage of the linear Hall sensor 8. For example, when the output voltage of the linear Hall sensor 8 is a maximum value, it indicates that the steerable wheel 4 is at the right limit position; and when the output voltage of the linear Hall sensor 8 is a minimum value, it indicates that the steerable wheel 4 is at the left limit position.

According to the mapping relationship between the rotation angle of the steerable wheel and the output voltage of the linear Hall sensor 8, even when an error occurs in the linear Hall sensor 8, the control module of the robotic mower may compare the maximum value and the minimum value of the output voltage of the linear Hall sensor 8, re-establish a mapping table according to these values, and then enable the steerable wheel to be automatically moved to the middle position according to the mapping table for self-starting and positioning, without manual participation, thereby greatly improving the working efficiency.

In the above examples, the shape of the magnetic steel 9 is not limited. The present disclosure preferably uses circular magnetic steels because a plurality of circular magnetic steels have been used in other positions of the robotic mower (e.g., emergency stop keys, lift sensors, etc.), and the use of magnetic steels of the same specification is beneficial for cost reduction. It should be understood that the magnetic steel 9 may also be other permanent magnets, provided that it can be detected by the linear Hall sensor.

In the above embodiments, a magnetization direction of the magnetic steel 9 and a polarity direction of the magnetic steel after mounting are not limited, provided that the magnetic steel is compatible with the selected linear Hall sensor.

In the above embodiments, the positions of the linear Hall sensor and the magnetic steel are not limited, provided that the linear Hall sensor can detect the signal of the magnetic steel at any point within the rotation range of the steerable wheel, and the signal of the magnetic steel at any two positions are different. Further, since there is a mechanical stop at the limit position of rotation of the steerable wheel, and the mechanical stop is symmetrically disposed about the central plane, there is no need to limit the positions of the magnetic steel and the linear Hall sensor on a horizontal projection plane. That is, when the steerable wheel is oriented straight ahead, the magnetic steel may not be located on the central plane; the linear Hall sensor may not necessarily be symmetrically disposed about the central plane, or may not be disposed at the limit position corresponding to the rotation of the steerable wheel. As shown in FIG. 8, based on the above embodiments, the automated steering calibration method for the robotic mower of the present disclosure may include the following steps.
100. The steerable wheel 4 is controlled to rotate toward a first limit position (e.g., the right limit position) until the steerable wheel 4 reaches the first limit position, and a first voltage output by the linear Hall sensor at this time is recorded. For example, for the first embodiment, first voltages *E*_{1*_{A}*} and *E*_{1*_{B}*} output by the two linear Hall sensors 8A and 8B are recorded, and for the second embodiment, a first voltage *E*₁ output by the linear Hall sensor 8 is recorded.
200. The steerable wheel 4 is controlled to rotate toward a second limit position (e.g., the left limit position) until the steerable wheel 4 reaches the second limit position, and a second voltage output by the linear Hall sensor at this time is recorded. For example, for the first embodiment, second voltages *E*_{2*_{A}*} and *E*_{2*_{B}*} output by the two linear Hall sensors 8A and 8B are recorded, and for the second embodiment, a second voltage *E*₂ output by the linear Hall sensor 8 is recorded.
300. A mapping relationship between the output voltage of the linear Hall sensor 8 and the steering angle of the steerable wheel 4 is determined (e.g., when the linear Hall sensor is used at delivery or for the first time) and/or corrected (e.g., during subsequent use) based on the first voltage and the second voltage, to obtain a corresponding third voltage *E*₃ output by the linear Hall sensor when the steerable wheel 4 is at the straight-ahead position. Specifically, according to an output voltage formula *E* = *k* · *x + p* of the linear Hall sensor, two equations corresponding to *E*₁ and *E*₂ may be simultaneously used to determine two parameters *k*and *p*, and then the distance *x*₃ between the linear Hall sensor and the magnetic steel when the steerable wheel 4 is at the straight-ahead position is substituted into *E = k · x + p* to obtain the third voltage *E*₃. Since the distance *x* between the linear Hall sensor and the magnetic steel is in one-to-one correspondence with the steering angle of the steerable wheel, and the functional relationship thereof has been described above, the mapping relationship between the output voltage of the linear Hall sensor and the steering angle of the steerable wheel can be further determined.
400. The steering motor 4 is controlled to rotate until the voltage output by the linear Hall sensor 8 (or 8A and 8B) is equal to the third voltage *E*₃, and in this case, the steerable wheel 4 is oriented straight ahead, thereby completing automated steering calibration. In the case where the steering motor itself has a steering detection sensor, whether the calibration is accurate may be further verified by comparing whether the steering of the steerable wheel obtained by the steering motor at this time is oriented straight ahead.

Since the third voltage *E*₃ is calculated according to the first voltage *E*₁ and the second voltage *E*₂ measured in real time through the preset program in the control module, steering errors generated by the linear Hall sensor in different working environments are avoided, thereby ensuring that the robotic mower can steer correctly. In addition, since the steering calibration is automated, the working efficiency is improved, and errors caused by manual alignment in the prior art are resolved.

Since the position relationship between the magnetic steel and the linear Hall sensor and the limit position of the steerable wheel are fixed, the parameters (e.g., kand *p*) of the linear Hall sensor are corrected by *E*₁, *E*₂, and other known parameters, so as to correct errors of the linear Hall sensor. In some embodiments, a direction control parameter of the steerable wheel may be calculated in real time according to the above function. In some other embodiments, after calibration prior to the departure of the robotic mower, a mapping table between the steering angle and a Hall output voltage is established or corrected based on *E*₁, *E*₂, and other known parameters. The direction control parameter of the steerable wheel 4 may be obtained by retrieving the mapping table.

Preferably, the above automated steering calibration method is performed each time before the robotic mower departs from a docking station. That is, the robotic mower is parked at the docking station. When a departure condition is satisfied (i.e., a preset departure time is reached or a working period is active), the deviation of the steering angle of the steerable wheel is calibrated before the robotic mower leaves the docking station and enters a working region to work. After the calibration is completed, the robotic mower leaves the docking station and enters the working region to work.

In some embodiments, the robotic mower is in a working state. When the steerable wheel needs to be controlled to rotate to the limit position, the steering motor is controlled to rotate to a blocked state (that is, the steerable wheel reaches the limit position on one side) in a preset direction, and the output voltage of the linear Hall sensor in the blocked state is recorded. The current detection value is compared with the output voltage of the linear Hall sensor at the limit position recorded during the previous calibration. If a difference between the two exceeds an error threshold, it is determined that a non-negligible error has occurred in the linear Hall sensor, and the robotic mower is controlled to calibrate the angle deviation of the steerable wheel (that is, automated steering calibration is performed) according to the above method. In some embodiments, the robotic mower is controlled to return to the docking station, and then automated steering calibration is performed. In some embodiments, the robotic mower is controlled to stop traveling, and automated steering calibration is performed in place on the lawn. However, in-place calibration is likely to damage the lawn and is therefore generally not recommended.

The embodiments of the present disclosure further provide a robotic mower. The robotic mower includes a main control board. The main control board includes a processor and a memory. The memory stores a computer program, where the computer program, when executed by the processor, is caused to implement the steps of the automated steering calibration method described above. Preferably, the main control board is arranged proximal to the magnetic steel, such that the linear Hall sensor mounted on the main control board can detect the signal of the magnetic steel. That is, during the steering of the steerable wheel, the magnetic steel is always within an effective detection range of the linear Hall sensor.

Exemplarily, the computer program may be divided into one or more modules/units, and the one or more modules/units are stored in the memory and executed by the processor to complete the method according to the present disclosure. The one or more modules/units may be a series of computer program instruction segments capable of completing specific functions, and the instruction segments are used to describe the execution process of the computer program in the robot.

The control module of the robotic mower may include, but is not limited to, a processor and a memory. For example, the control module may further include an input/output device, a network access device, a bus, and the like.

The processor may be a central processing unit (CPU), or may be another general-purpose processor, a digital signal processor (DSP), an application specific integrated circuit (ASIC), a field-programmable gate array (FPGA) or another programmable logic device, a discrete gate or a transistor logic device, a discrete hardware component, or the like. The general-purpose processor may be a microprocessor, or the processor may be any conventional processor or the like. The processor is a control center of the robotic mower, and connects all parts of the entire robotic mower by using various interfaces and lines.

The memory may be configured to store a computer program and/or a module. The processor runs or executes the computer program and/or the module stored in the memory, and invokes data stored in the memory, to implement various functions of the robotic mower, such as traveling, positioning, mowing, returning for charging, and performing automated steering calibration. The memory may mainly include a program storage area and a data storage area. The program storage area may store an operating system, an application program required by at least one function, and the like. The data storage area may store working data of the robotic mower, including, for example, a mapping table between the linear Hall sensor and the steering angle, and the like. In addition, the memory may include a high-speed random access memory, and may further include a non-volatile memory, such as a hard disk, a storage memory, a removable hard disk, a smart media card (SMC), a secure digital (SD) card, a flash card, at least one disk storage device, a flash memory device, or another volatile solid-state storage device.

In the present disclosure, the arrangement structure of the magnetic steel and the linear Hall sensor is optimized, such that automated steering calibration is achieved, thereby improving the working efficiency and the calibration accuracy.

The preferred embodiments of the present disclosure have been described in detail above, but it should be understood that various changes or modifications of the present disclosure can be made by those skilled in the art after reading the above teachings of the present disclosure. Such equivalents also fall within the scope of the appended claims of the present disclosure.

## Claims

1. An automated steering calibration method for a robotic mower, the robotic mower comprising a driving wheel and a steerable wheel, and the steerable wheel being controlled to steer by a steering motor, wherein the robotic mower further comprises at least one linear Hall sensor and one permanent magnet; the permanent magnet is disposed on a member that rotates synchronously with an output shaft of the steering motor, and positions of the at least one linear Hall sensor and the one permanent magnet are arranged such that there is a unique mapping relationship between an output voltage of the at least one linear Hall sensor and a steering angle of the steerable wheel; and the automated steering calibration method comprises the following steps:
controlling the steerable wheel to rotate toward a first limit position until the steerable wheel reaches the first limit position, and recording a first voltage output by the at least one linear Hall sensor at this time;
controlling the steerable wheel to rotate toward a second limit position until the steerable wheel reaches the second limit position, and recording a second voltage output by the at least one linear Hall sensor at this time;
determining or correcting the unique mapping relationship according to the first voltage and the second voltage to obtain a corresponding third voltage output by the at least one linear Hall sensor when the steerable wheel is at a straight-ahead position; and
controlling the steering motor to rotate until a voltage output by the at least one linear Hall sensor is equal to the third voltage.

2. The automated steering calibration method for the robotic mower according to claim 1, wherein the at least one linear Hall sensor comprises two linear Hall sensors; the two linear Hall sensors are located on two sides of a central plane and are located directly above a movement trajectory of the permanent magnet; the central plane is parallel to a straight-ahead traveling direction of the robotic mower, an output shaft of the steering motor is located on the central plane, and the first limit position and the second limit position are symmetrically disposed on left and right sides of the central plane; and a distance between the permanent magnet and the linear Hall sensor on a first side is *a* = 2*r* sin(*α*/2), and a distance between the permanent magnet and the linear Hall sensor on a second side is *b* = 2r cos(*α*/2), wherein *r* is a distance between the permanent magnet and a rotation center of the steering motor, and *α* is an included angle formed by the permanent magnet, the rotation center, and the linear Hall sensor on the first side; and a ratio of *a* to *b* represents steering of the steering motor.

3. The automated steering calibration method for a robotic mower according to claim 2, wherein the two linear Hall sensors are disposed at the first limit position and the second limit position, respectively.

4. The automated steering calibration method for the robotic mower according to claim 2 or 3, wherein the permanent magnet is located on the central plane when the steerable wheel is oriented straight ahead.

5. The automated steering calibration method for a robotic mower according to claim 1, wherein the at least one linear Hall sensor comprises one linear Hall sensor, and the one linear Hall sensor is located directly above a movement trajectory of the permanent magnet; and a distance between the permanent magnet and the linear Hall sensor is *d* = 2*r* sin(*α*/2), wherein *r* is a distance between the permanent magnet and a rotation center of the steering motor, and *α* is an included angle formed by the permanent magnet, the rotation center, and the linear Hall sensor; and a value of *d* or a corresponding output voltage of the linear Hall sensor represents steering of the steering motor.

6. The automated steering calibration method for the robotic mower according to claim 5, wherein the permanent magnet is located at the first limit position or the second limit position.

7. The automated steering calibration method for a robotic mower according to claim 1, wherein the at least one linear Hall sensor is arranged on a main control board of the robotic mower.

8. The automated steering calibration method for a robotic mower according to claim 1, wherein the permanent magnet is a circular magnetic steel.

9. The automated steering calibration method for a robotic mower according to claim 1, wherein the unique mapping relationship is determined by establishing a mapping function or a mapping table.

10. The automated steering calibration method for a robotic mower according to claim 1, wherein the automated steering calibration method further comprises: automatically calibrating a steerable wheel each time before the robotic mower departs from a docking station.

11. The automated steering calibration method for a robotic mower according to claim 1, wherein the automated steering calibration method further comprises:
when the robotic mower is in a working state, performing automated steering calibration in response to detecting that a difference between the first voltage or the second voltage and the first voltage or the second voltage recorded during previous automated steering calibration is greater than an error threshold.

12. The automated steering calibration method for a robotic mower according to claim 11, wherein the robotic mower is controlled to return to a docking station before automated steering calibration.

13. The automated steering calibration method for a robotic mower according to claim 11, wherein correction of the unique mapping relationship comprises correction of a parameter of the linear Hall sensor.

14. A robotic mower, the robotic mower comprising a main control board and the main control board storing a computer program, wherein the computer program, when executed by the main control board, is caused to implement the steps of the automated steering calibration method according to any one of claims 1 to 13.
